# EUROPÄISCHE PATENTSCHRIFT

(11) **EP 0 438 145 B1**
(45) Veröffentlichungstag und Bekanntmachung des Hinweises auf die Patenterteilung: **20.04.1994**
(21) Anmeldenummer: 91100505.6
(22) Anmeldetag: 17.01.1991
(51) Int. Cl.: B60J 7/10

(54) **Plane und Vorrichtung zum Aufrollen derselben**
Tarpaulin and its roll up device
Bâche et dispositif pour l'enrouler

(30) Priorität: 19.01.1990 DE 4001461
(43) Veröffentlichungstag der Anmeldung: 24.07.1991
(73) Patentinhaber: Stegmaier, Hans Peter, D-88433 Schemmerhofen (DE)
(72) Erfinder: Stegmaier, Hans Peter, D-88433 Schemmerhofen (DE)
(74) Vertreter: Patentanwälte Eisele, Otten & Roth

(56) Entgegenhaltungen:
- FR-A- 2 543 082
- US-A- 4 212 492
- US-E- 31 746

## Beschreibung

Die Erfindung betrifft eine Vorrichtung zum Aufrollen einer Plane auf einen an dieser angebrachten Wickelstab, welcher mittels eines selbsthemmenden Winkelgetriebes angetrieben wird.

Unter "Plane" sind flexible Abdeckungen jeder Art und aus allen geeigneten Werkstoffen zu verstehen, also auch Vorhänge, z. B. Trennvorhänge oder Außenwände von Zelten, Vorhänge aus Stoff, Kulissen usw. Als Werkstoffe kommen PVC oder andere Kunststoffe sowie alle möglichen Gewebearten oder Verbundwerkstoffe in Betracht. Eine bevorzugte Anwendung der Erfindung wird bei Fahrzeugen gesehen.

Eine Vorrichtung der einleitend bezeichneten Art ist aus dem französischen Gebrauchsmuster 2 543 082 bekannt. Sie dient dazu, die Plane eines LKW-Aufbaus zum Beladen hochzurollen. Unter den verschiedenen Ausführungsformen ist auch eine mit einem Winkelgetriebe beschrieben, welches mittels einer an dem Aufbau befestigten Führungs- oder Haltevorrichtung geführt wird.

Nachteilig ist hierbei, daß das Winkelgetriebe und die zu ihm führende Antriebswelle ständig an dem LKW-Aufbau, und zwar an seiner Außenseite, verbleiben. Die Aufrollvorrichtung erfordert auch besondere Installationsarbeiten und auf den jeweiligen Einzelfall abgestimmte Einzelteile.

Der Erfindung liegt die Aufgabe zugrunde, die bekannte Vorrichtung zu vereinfachen und so zu gestalten, daß keine fest anzubringenden Führungsvorrichtungen am betreffenden Fahrzeug, Gebäude o. dgl. erforderlich sind.

Diese Aufgabe wird erfindungsgemäß mit einer Vorrichtung gelöst, welche die im Anspruch 1 gekennzeichneten Merkmale aufweist. Dazu gehört eine Plane, an welcher ein torsionsfester, aber nicht unbedingt biegesteifer Wickelstab angebracht ist. Die Baueinheit, welche das Winkelgetriebe umfaßt, wird durch Aufstecken mit dem Wickelstab verbunden und kann dann sofort betätigt werden. Irgendwelche sonstigen Führungsteile, die fest installiert werden müssen, sind nicht erforderlich. Verwendet man als Winkelgetriebe ein Schneckengetriebe, so kann dessen Schneckenrad, sofern es unmittelbar als Ausgangselement verwendet wird, eine unrunde axiale Aussparung erhalten, welche entweder unmittelbar auf den Wickelstab oder auf einen den Wickelstab verlängernden Profilstab aufgesteckt wird.

Als Antriebsorgan kann eine drehfest mit dem Eingangselement verbundene Antriebswelle vorgesehen sein, an deren anderem Ende eine Handkurbel angeschlossen ist. Die Anordnung kann aber auch so getroffen sein, daß die Antriebswelle in einem Halterohr gelagert ist, das an dem Gehäuse des Winkelgetriebes befestigt ist. In diesem Fall kann der Bedienende das Winkelgetriebe beim Einstecken und Abnehmen noch besser handhaben. Angewendet auf die Seitenwandplane eines LKW ist das Antriebsorgan z. B. etwa 2 m lang.

Ist das Winkelgetriebe mit dem Wickelstab verbunden, beispielsweise durch eine Steckkupplung, so kann eine Person im Stehen die Plane bequem hochkurbeln, wobei durch die Selbsthemmung des Getriebes ein Zurückfallen ausgeschlossen ist. Nach vollständigem oder teilweisem Hochwickeln kann das Halterohr auch losgelassen werden, da es durch seine Länge und sein Gewicht ein so großes Arretiermoment auf die Achse des Wickelstabes ausübt, daß dieser seine Winkelstellung sicher beibehält. Selbstverständlich erlaubt die Vorrichtung aber auch ein Aufrollen von horizontalen Planen.

Nach einer zweckmäßigen bevorzugten Ausführungsform der Erfindung ist das Schneckenrad eines als Winkelgetriebe verwendeten Schneckengetriebes durch eine unrunde axiale Aussparung selbst als Kupplungsteil ausgebildet. Das Schneckengetriebe ist vorzugsweise in einem eigenen Gehäuse gelagert und wird von einem am Halterohr angebrachten U-förmig gebogenen Halteblech umschlossen und gehalten. Verwendbar sind ganz gewöhnliche im Handel befindliche Schneckengetriebe. Bei dieser Befestigungsart durchsetzt die Schneckenwelle den Steg des Halteblechs und ist mit der Antriebswelle drehfest verbunden.

Anstelle einer Handkurbel als einfachstem Antriebselement kann am antriebsseitigen Ende des Halterohres auch ein mit der Antriebswelle kuppelbarer Motor vorgesehen sein. In Betracht kommen hier Druckluftmotoren, da bei LKW's Druckluft meist vorhanden ist, sowie hydraulische oder elektrische Motoren. Vorteilhafterweise ist der Motor auf das Halterohr aufsteckbar ausgebildet, beispielsweise ein batteriebetriebener Elektromotor.

Was nun die Plane betrifft, so ist an dieser, vorzugsweise an der Innenseite bzw. der Rückseite, ein torsionsfester Wickelstab angebracht. Dieser sollte möglichst so lang wie die Plane sein. Zu diesem Zweck kann er aus mehreren torsionsfest miteinander verbundenen Einzelabschnitten bestehen. Die Befestigung an der Plane kann mit Hilfe eines durchgehenden oder aus Einzelabschnitten bestehenden Keders oder auch auf andere Weise erfolgen. Im erstgenannten Fall hat der Wickelstab zweckmäßigerweise eine an ihrer Öffnung verengte Längsnut, welche den Randwulst des an der Plane durch Schweißen, Nieten oder Nähen befestigten Keders aufnimmt. Statt eines Keders können auch sogenannte Kederhaken verwendet werden. Grundsätzlich ist es auch denkbar, einen flachen Wickelstab in einen Hohlsaum der Plane einzufügen oder mit einzelnen Laschen zu befestigen.

Für die bevorzugte Kederbefestigung wird vorteilhafterweise eine Metall-Hohlprofilschiene als Wickelstab vorgesehen, die einen unrunden Profilabschnitt zur drehfesten Aufnahme eines Kupplungsteils und eine Kedernut aufweist. Damit bei geschlossener Plane, wenn die Vorrichtung nicht benutzt wird, der Wickelstab bzw. sein Kupplungsteil nicht über den Rand der Plane vorsteht, wird vorgeschlagen, daß ein in die Metall-Hohlprofilschiene eingesteckter Kupplungsstab zwischen Anschlägen in Längsrichtung verschiebbar ist, so daß er im Falle der Nichtbenutzung eingeschoben und bei Bedarf herausgezogen werden kann.

Der an der Plane befestigte Wickelstab kann vorteilhafterweise auch dazu verwendet werden, den durch die betreffende Plane abgeschlossenen Raum gegen unberechtigtes Eindringen zu sichern. Es wird vorgeschlagen, daß an den Wickelstabenden Verschlußorgane angebracht oder anbringbar sind, mit deren Hilfe der Wickelstab an einer fahrzeug- oder gebäudefesten Struktur mittels eines Schlosses befestigt werden kann oder, beispielsweise beim Laderaum eines LKW, mit einem im Winkel von 90° anschließenden Wickelstab einer weiteren Plane verbunden werden kann. Als Schloß können Vorhängeschlösser verwendet werden oder in die Verschlußorgane speziell eingebaute Sicherheitsschlösser. Auf diese Weise wird jedenfalls erreicht, daß der zu schützende Raum mit wenigen Griffen zumindest so weit gesichert ist, daß die abschließende Plane oder die Planen nicht aufgerollt werden können.

Ein Ausführungsbeispiel der Erfindung wird nachfolgend anhand der Zeichnung erläutert. Im einzelnen zeigt
- Fig. 1: eine schematische Anwendungsskizze der Aufrollvorrichtung,
- Fig. 2: die Seitenansicht der Vorrichtung mit aufgeschnittenem Halterohr,
- Fig. 3: eine Teilansicht der unteren Ecke der aufrollbaren Plane in Pfeilrichtung III nach Fig. 1,
- Fig. 4: einen Vertikalschnitt IV-IV der Anordnung nach Fig. 3 und
- Fig. 5: den Längsschnitt einer Verbindungsstelle zweier Wickelstababschnitte.

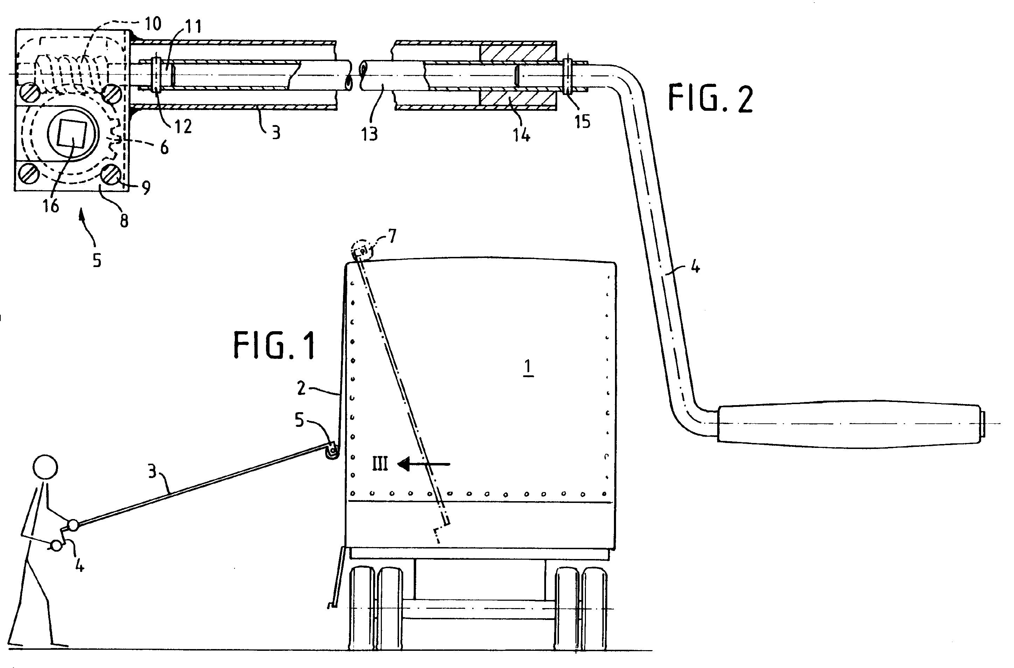

Fig. 1 zeigt die Heckansicht eines LKW 1, dessen linke seitliche Plane 2 mittels der vorgeschlagenen Vorrichtung aufgerollt wird. Die Bedienungsperson steht im Heckbereich in einem Abstand neben dem Fahrzeug und hält mit der einen Hand das Halterohr 3 und mit der anderen Hand die Kurbel 4 der Vorrichtung. Das Schneckengetriebe 5, genau genommen dessen Schneckenrad 6, ist mit dem heckseitigen Ende des an der Plane 2 angebrachten Wickelstabes gekuppelt. Durch Rechtsdrehen der Kurbel 4 hat die Bedienungsperson den unteren Abschnitt der Plane 2 bereits ein Stück weit nach außen aufgewickelt. Wird die Handkurbel losgelassen, so tritt Selbsthemmung des Schneckengetriebes ein und die Plane bleibt in jeder gewünschten halboffenen Stellung. Zum Schluß läuft der Wickel 7 über die längsseitige Dachkante und bleibt auf dem Dach liegen. Dies ist strichpunktiert eingezeichnet. Der Haltestab 3 mit der Kurbel hängt vor der heckseitigen Plane herunter. Infolge der Selbsthemmung des Schneckengetriebes 5 wirkt dem nach links gerichteten Drehmoment am Wickelstab das Moment des pendelnden Halterohres 3 entgegen. Deshalb ist es auch ein Stück weit nach rechts ausgelenkt.

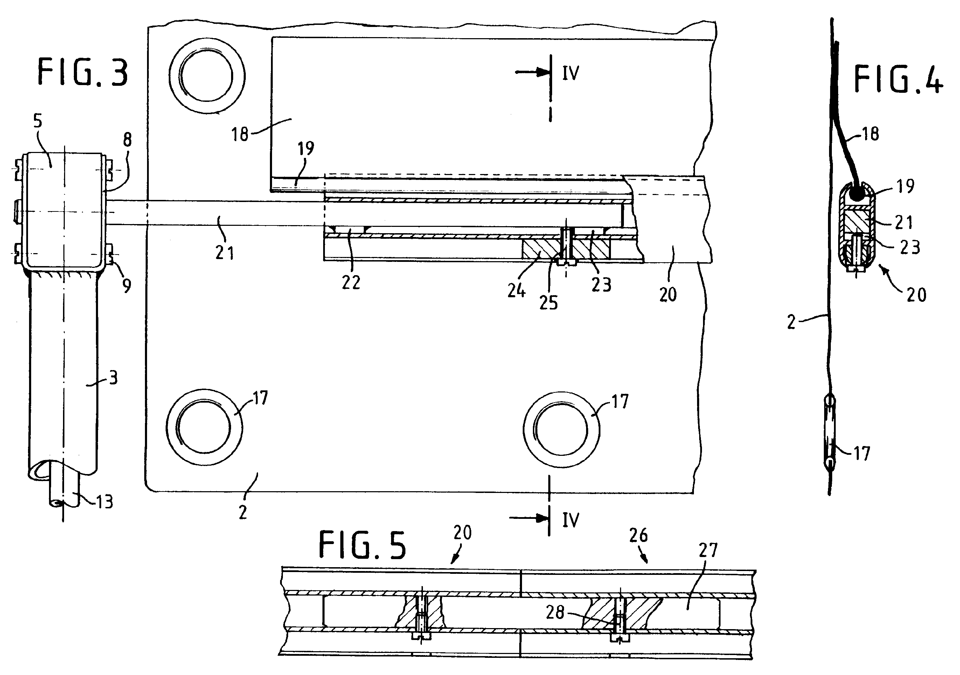

Fig. 2 zeigt die ganze Vorrichtung im größeren Maßstab. Das Halterohr 3 ist etwa 2 m lang und an einem Ende mit dem Steg eines U-förmig gebogenen Halteblechs 8 verschweißt (siehe auch Fig. 3). In dieses Halteblech ist das annähernd quadrische Gehäuse des Schneckengetriebes 5 eingesetzt und mit acht Schrauben 9 befestigt. Wie Fig. 2 andeutet, ist die mit dem Schneckenrad 6 kämmende Schnecke 10 in Verlängerung des Halterohrs 3 angeordnet. Ihr Antriebszapfen 11 ist mittels eines Querstifts 12 mit einer hohlen Antriebswelle 13 verbunden, die sich durch das Halterohr 3 erstreckt und am andere Ende mittels einer Lagerhülse 14 gelagert ist. In die Antriebswelle 13 ist die Kurbel 4 eingesteckt und mittels eines Querstifts 15 verstiftet. Das Schneckenrad 6 ist auf nicht näher gezeigte Weise mittels eines Lagerbunds in seinem Gehäuse gelagert und hat eine in Achsrichtung durchgehende zentrale quadratische Einstecköffnung 16. Das Schneckengetriebe 5 hat ein Übersetzungsverhältnis 1 : 7 und ist selbsthemmend.

Die Ausrüstung der Plane 2, deren Schnürlöcher mit Verstärkungsringen 17 versehen sind, zeigen die Figuren 3 und 4. In einem Abstand vom unteren Rand verläuft parallel zu diesem ein Keder 18, der im Falle einer PVC-Plane aufgeschweißt ist. Sein Randwulst 19 befindet sich unten. Er ist in die obere Kedernut eines Wickelstabs 20 eingeschoben. Hierbei handelt es sich um ein Hohlprofil aus Aluminium mit einer rechteckigen mittleren Kammer und zwei einander gegenüberliegenden Kedernuten. In die Profilkammer ist ein querschnittlich quadratischer Kupplungsstab 21 eingesteckt, an den zwei Anschlagplättchen 22 und 23 angeschweißt sind. Diese Anschlagplättchen dienen zum einen dazu, den Querschnitt der Profilkammer ganz auszufüllen, und zum anderen als Anschläge. Es ist nämlich von unten mittels eines in der unteren Kedernut liegenden Gleitsteins 24, der eine Gewindebohrung hat, eine in die Profilkammer hineinstehende Anschlagschraube 25 eingesetzt. Der Kupplungsstab 21 läßt sich demzufolge nur so weit verschieben, bis das eine oder andere Plättchen an der Schraube anschlägt.

Der Wickelstab 20 hängt also an dem Keder 18 und im Beispiel, welches die Betriebsstellung zeigt, ist der vierkantige Kupplungsstab 21 bis zum Anschlag herausgezogen. Er überragt damit den linken Rand der Plane und durchsetzt die Einstecköffnung 16 des Schneckenrades 6. Wird die Antriebswelle 13 gedreht, so dreht sich mit entsprechender Übersetzung auch der Kupplungsstab 21 und damit der Wickelstab 20 und damit wird die Plane 2 aufgewickelt und hochgewälzt. Der unter dem Wickelstab befindliche Randabschnitt der Plane wird dabei mit eingewickelt. Nachdem die Plane wieder heruntergelassen ist, kann die Vorrichtung abgenommen und an geeigneter Stelle verstaut werden. Den Kupplungsstab 21 schiebt man wieder bis zum Anschlag ein.

Der Wickelstab 20 kann durch eine gleichartige Wickelstab-Verlängerung 26 im Bedarfsfall verlängert werden. Dazu ist ein querschnittlich rechteckiger, den Profilkammerquerschnitt voll ausfüllender Verbindungsstab 27 vorgesehen. Er wird in die zu verbindenden Endabschnitte der Wickelstäbe eingesteckt und durch je eine Schraube 28 an dem betreffenden Wickelstab befestigt.

## Patentansprüche

1. Vorrichtung zum Aufrollen einer Plane auf einen an dieser angebrachten Wickelstab, welcher mittels eines selbsthemmenden Winkelgetriebes angetrieben wird, dadurch gekennzeichnet, daß das Winkelgetriebe (5) und ein mit dessen Eingangselement (11) drehfest und biegesteif verbundenes stabförmiges Antriebsorgan eine Baueinheit bilden, welche mittels geeigneter Kupplungsteile (16, 21) zwischen dem Ausgangselement (6) des Winkelgetriebes und dem Wickelstab (20) auf diesen aufgesteckt werden kann.

2. Vorrichtung nach Anspruch 1, dadurch gekennzeichnet, daß das Ausgangselement (6) durch eine unrunde axiale Aussparung (16) selbst als Kupplungsteil ausgebildet ist.

3. Vorrichtung nach Anspruch 1, dadurch gekennzeichnet, daß das Antriebsorgan eine drehfest mit dem Eingangselement (11) verbundene Antriebswelle (13) ist, an deren anderem Ende eine Handkurbel (4) angeschlossen ist.

4. Vorrichtung nach Anspruch 1, dadurch gekennzeichnet, daß das Antriebsorgan ein Halterohr (3) und eine in diesem gelagerte Antriebswelle (13) umfaßt und daß das Halterohr (3) an dem Gehäuse des Winkelgetriebes (5) befestigt ist.

5. Vorrichtung nach Anspruch 4, dadurch gekennzeichnet, daß ein am Halterohr (3) befestigtes U-förmig gebogenes Halteblech (8) das Gehäuse des Winkelgetriebes (5) umschließt und hält.

6. Vorrichtung nach Anspruch 1, dadurch gekennzeichnet, daß an dem antriebsseitigen Ende des Halterohrs (3) ein mit der Antriebswelle (13) kuppelbarer Motor vorgesehen ist.

7. Vorrichtung nach Anspruch 6, dadurch gekennzeichnet, daß der Motor auf das Halterohr aufsteckbar ausgebildet ist.

8. Plane, dadurch gekennzeichnet, daß im Randbereich derselben, vorzugsweise an der Innenseite, ein torsionsfester Wickelstab (20) angebracht ist oder die zur Anbringung geeigneten Vorkehrungen (18) getroffen sind.

9. Plane nach Anspruch 8, dadurch gekennzeichnet, daß an der Plane (2) ein Keder (18), ggf. in einzelnen Abschnitten, angebracht ist, dessen Randwulst (19) in eine entsprechende Längsnut mit verengtem Nutschlitz eines Wickelstabes (20) paßt.

10. Plane nach Anspruch 8, dadurch gekennzeichnet, daß als Wickelstab (20) ein Metall-Hohlprofilstab vorgesehen ist, der einen unrunden Profilabschnitt zur drehfesten Aufnahme eines Kupplungsteils (21) und eine Kedernut aufweist.

11. Plane nach Anspruch 10, dadurch gekennzeichnet, daß ein in den Metall-Hohlprofilstab eingesteckter Kupplungsstab (21) zwischen Anschlägen (22, 23) in Längsrichtung verschiebbar ist.

12. Plane nach Anspruch 8, dadurch gekennzeichnet, daß an den Wickelstabenden Verschlußorgane angebracht oder anbringbar sind, mit deren Hilfe der Wickelstab an einer fahrzeug- oder gebäudefesten Struktur abschließbar befestigt oder mit einem anschließenden Wickelstab einer weiteren Plane verbunden werden kann.

## Claims

1. Device for rolling up a tarpaulin onto a winding bar fitted to it, which bar is driven by means of a self-locking mitre gear, characterized in that the mitre gear (5) and a bar-shaped drive member connected torsionally keyed and bending-stiff to the input element (11) of the mitre gear form one unit, which can be pushed onto the winding bar (20) by means of suitable coupling components (16, 21) between the output element (6) of the mitre gear and the winding bar.

2. Device according to Claim 1, characterized in that the output element (6) is formed itself as coupling component by a non-circular axial aperture (16).

3. Device according to Claim 1, characterized in that the drive member is a drive shaft (13), connected torsionally keyed to the input element (11), to the other end of which drive shaft a hand crank (4) is attached.

4. Device according to Claim 1, characterized in that the drive member comprises a holding tube (3) and a drive shaft (13) journalled therein and that the holding tube (3) is fixed to the casing of the mitre gear (5).

5. Device according to Claim 4, characterized in that a U-shaped, bent holding plate (8), fixed to the holding tube (3), surrounds and holds the casing of the mitre gear (5).

6. Device according to Claim 1, characterized in that a motor which can be coupled to the drive shaft (13) is provided at the drive end of the holding tube (3).

7. Device according to Claim 6, characterized in that the motor is constructed to be pushed onto the holding tube.

8. Tarpaulin, characterized in that, in the edge region of same, preferably on its inner face, a torsionally stiff winding bar (20) is mounted, or the appropriate measures (18) are taken for the mounting.

9. Tarpaulin according to Claim 8, characterized in that a batten (18), possibly in individual sections, is fitted to the tarpaulin (2), the edge beading (19) of which batten fits into a corresponding longitudinal groove with constricted groove slit of a winding bar (20).

10. Tarpaulin according to Claim 8, characterized in that a metal hollow profile bar is provided as winding bar (20), which possesses a non-circular profile cross-section for the torsionally keyed seating of a coupling component (21) and a batten groove.

11. Tarpaulin according to Claim 10, characterized in that a coupling bar (21), inserted into the metal hollow profile bar, is displaceable in the longitudinal direction between stops (22, 23).

12. Tarpaulin according to Claim 8, characterized in that closure members are fitted or can be fitted to the ends of the winding bar, by means of which the winding bar can be closably fixed to a structure attached to an automobile or building or can be connected to an adjoining winding bar of a further tarpaulin.

## Revendications

1. Dispositif pour enrouler une bâche sur une barre d'enroulement appliquée sur celle-ci, qui est entraînée au moyen d'un engrenage angulaire autobloquant,
caractérisé en ce que l'engrenage angulaire (5) et un organe d'entraînement, en forme de barre, relié à son élément d'entrée (11) de façon solidaire en rotation et rigide en flexion, forment une unité modulaire, laquelle peut être montée, au moyen de pièces de couplage appropriées (16,21), entre l'élément de sortie (6) de l'engrenage angulaire et la barre d'enroulement (20), sur celle-ci.

2. Dispositif selon la revendication 1,
caractérisé en ce que l'élément de sortie (6) est réalisé lui-même en tant que pièce de couplage, par un évidement axial (16) non rond.

3. Dispositif selon la revendication 1,
caractérisé en ce que l'organe d'entraînement est un arbre d'entraînement (13) relié, de façon solidaire en rotation, à l'élément d'entrée (11), à l'autre extrémité duquel est raccordée une manivelle (4).

4. Dispositif selon la revendication 1,
caractérisé en ce que l'organe d'entraînement comporte un tube de maintien (3) et un arbre d'entraînement (13) monté dans celui-ci, et en ce que le tube de maintien (3) est fixé au boîtier de l'engrenage angulaire (5).

5. Dispositif selon la revendication 4,
caractérisé en ce qu'une tôle de maintien (8), cintrée en forme de U et fixée au tube de maintien (3), entoure et maintient le boîtier de l'engrenage angulaire (5).

6. Dispositif selon la revendication 1,
caractérisé en ce qu'un moteur, qui peut être couplé à l'arbre d'entraînement (13), est prévu à l'extrémité, du côté d'entraînement, du tube de maintien (3).

7. Dispositif selon la revendication 6,
caractérisé en ce que le moteur est réalisé de façon à pouvoir être enfiché sur le tube de maintien.

8. Bâche,
caractérisée en ce que, dans la zone marginale de celle-ci, de préférence sur la face interne, est appliquée une barre d'enroulement (20) résistant à la torsion, ou des préparatifs appropriés (18) sont faits pour son application.

9. Bâche selon la revendication 8,
caractérisée en ce que, sur la bâche (2), est appliqué un renfort (18), le cas échéant en tronçons individuels, dont le bourrelet de bordure (19) s'adapte dans une gorge longitudinale correspondante, à fente rétrécie, d'une barre d'enroulement (20).

10. Bâche selon la revendication 8,
caractérisée en ce que la barre d'enroulement (20) est constituée par une barre profilée métallique creuse, qui présente un tronçon de profil non rond pour recevoir, de façon solidaire en rotation, une pièce de couplage (21), et une gorge pour un renfort.

11. Bâche selon la revendication 10,
caractérisée en ce qu'une barre de couplage (21), enfichée dans la barre profilée métallique creuse, peut être déplacée, en direction longitudinale, entre des butées (22,23).

12. Bâche selon la revendication 8,
caractérisée en ce que des organes de fermeture sont appliqués ou peuvent être appliqués, aux extrémités de la barre d'enroulement, à l'aide desquels la barre d'enroulement peut être fixée, de façon verrouillable, à une structure solidaire d'un bâtiment ou d'un véhicule, ou peut être reliée à une barre d'enroulement adjacente d'une autre bâche.
